# EUROPEAN PATENT APPLICATION

(11) **EP 3 364 318 A1**
(43) Date of publication of application: **22.08.2018**
(21) Application number: 17178887.0
(22) Date of filing: 29.06.2017
(51) Int. Cl.: G06F 17/50

(54) **METHODS AND SYSTEMS FOR TIMING CONSTRAINT GENERATION IN IP/SOC DESIGN**

(30) Priority: 16.02.2017 IN 201741005549
(71) Applicant: Wipro Limited, 560 035 Karnataka (IN)
(72) Inventor: SADHU, Radha Krishna Moorthy, 560085 Bangalore (IN); MAHESHWARI, Gaurav, 560102 Bangalore (IN); BHIRUD, Sanjay Uddhavrao, 560068 Bangalore (IN)
(74) Representative: Finnegan Europe LLP

(57) **Abstract**

This disclosure relates generally to methods and systems for reducing complexity of synthesis and static timing analysis part in system-on-chip design arising out of designs received from multiple sources of integrated circuit blocks. An integrated circuit design apparatus comprises one or more hardware processors and one or more memory units storing instructions executable by the one or more hardware processors for obtaining register transfer level code for an integrated circuit design block; parsing the register transfer level code to extract a pragma included in the register transfer level code for the integrated design block; determining a timing constraint from the extracted pragma; synthesizing a netlist for an integrated circuit design including at least one instance of the integrated circuit design block, using the determined timing constraint; and providing the netlist for use in an integrated circuit manufacturing process.

## Description

### Technical Field

The field of the present invention relates to system-on-chip (SoC) design, wherein the SoC design involves using design blocks from multiple sources (designers). More specifically, the present invention relates to novel methods for generating timing constraints, and thus reducing the complexity of synthesis and static timing analysis (STA) in SoC design arising out of designs received from multiple sources of SoC blocks.

### Background

Many of the chips (Integrated Circuits) designed these days are SoC designs. A typical SoC comprises a plurality of design blocks. The SoC design blocks may be developed in-house or by third parties and are commonly referred to as intellectual property (IP) blocks. The IP blocks are coded in hardware description language (HDL), for example, in Verilog or VHSIC hardware description language (VHDL). A SoC may have features that support processing elements or interfaces to various external devices. Hence a SoC may comprise IP blocks like a central processing unit (CPU), and processing elements like video processing, audio processing, specific algorithm implementations or interfaces to memories like DDR, SD-Card, NOR, NAND or interfaces to peripherals like PCIe, USB, Ethernet, I2C, UART etc. Typically, all these blocks are IPs either developed internally or provided by a 3^{rd} party IP vendor.

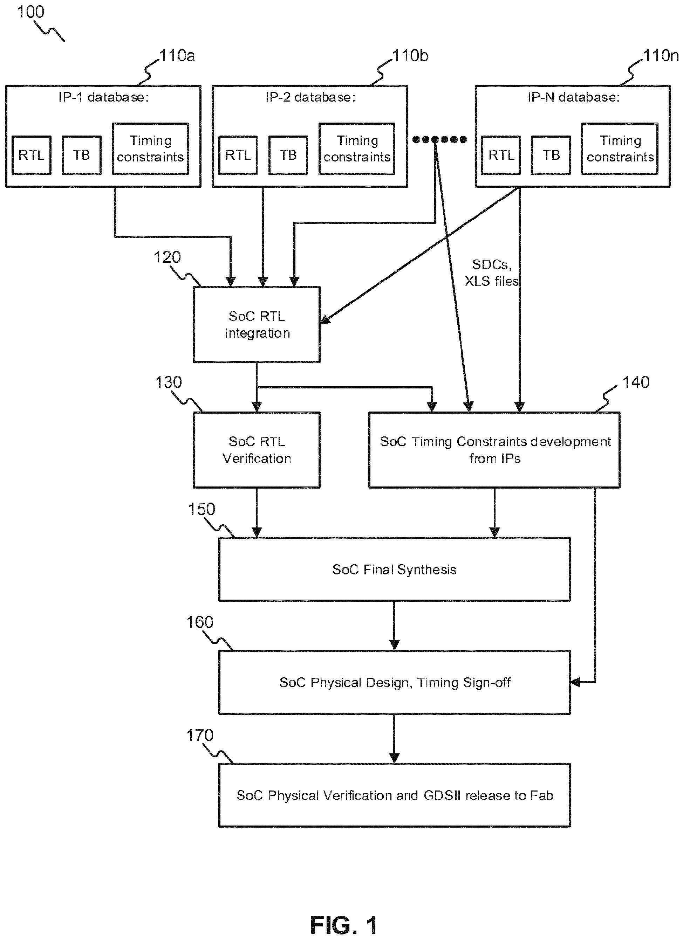

**FIG. 1** illustrates an exemplary SoC implementation flow 100 for integrating IP blocks 110a, 110b, ...110n. Each IP block database 110 (110a, 110b, ... 110n) comprises register transfer level (RTL) code (in HDL), test bench (TB) code, and timing constraints. The IP blocks 110a, 110b, ...110n may be from multiple sources. The SoC implementation flow 100 begins with register-transfer level (RTL) integration 120 of the IP blocks 110a, 110b, ...110n. Next, functional verification 130 is performed of the integrated SoC RTL design. During SoC synthesis (step 150), a "netlist" that describes the connectivity of the gates in the overall SoC integrated circuit design is generated based on the integrated SoC RTL code.

Timing constraints for the different IP blocks 110 of the SoC implementation 100 are provided in separate files. Since the IP blocks can be from multiple sources, the timing constraints can be in different file formats, for example, Synopsys® Design Constraints (SDC), plain text (txt) or Microsoft Excel (XLS) file formats. In step 140, the timing constraints for the SoC are developed using the different files provided by the multiple sources for IP blocks 110a, 110b, ...110n.

As part of the SoC implementation flow 100, designers have to ensure that the different IP blocks are working at desired frequency in the fabricated SoC. This is performed by developing timing constraints during SoC synthesis (step 150) and physical design (step 160). Timing constraints, for example, clock frequency settings, defining false paths, defining multi cycle paths, etc. are used as part of static timing analysis (STA) during these steps to ensure that the SoC as a whole and the different IP blocks are working at targeted frequencies. Accurate timing constraints are required to achieve SoC implementation 100 with desired timing/frequency operation targets. SoC implementation 100 ends with physical verification and release of the design in GDSII format (a database file format which is the de facto industry standard for data exchange of integrated circuit or integrated circuit layout artwork) for fabrication.

There are several technical problems with such conventional SoC implementation methods, as explained below. Since SoC implementation 100 is performed by integrating IP blocks from multiple sources, the timing constraints need to be extracted from the different IP sources 110a, 110b, ...110n. However, there is no standard method amongst various IP sources for implementing these timing constraints and the timing constraints can be provided in different file formats like SDC, txt, and XLS. In some cases, the timing constraints are provided as part of the IP documentation accompanying the IP blocks. Teams performing the SoC implementation 100 need to extract the timing constraints from the different file formats and use them for SoC synthesis and STA. This is a challenging task as typical IP blocks can comprise millions of lines of RTL code and the synthesized netlist can comprise hundreds of millions to a few billion gates. There is a huge amount of manual effort involved in understanding and deriving the timing constraints provided by different IP sources in different file formats. The development of the timing constraints is therefore prone to errors. Additionally, the timing constraint files provided by the different IP sources themselves are prone to errors since the timing constraints are developed manually and can be developed by a different engineer than the one who designed the RTL. Some of these errors are detected and corrected during the implementation process, however some are not detected during the implementation process and make it to the final fabricated SoC. This can have a severe impact on the quality of the fabricated SoC. As an example, a timing constraint error during implementation may cause the SoC to be operated at 1 GHz frequency instead of target 2 GHz frequency. A different timing constraint error could, for example, cause an entire IP block to be inoperable and the fabricated SoC would need to be operated with the entire IP block disabled.

### SUMMARY

Embodiments of the present disclosure present technological improvements as solutions to one or more of the above-mentioned technical problems in conventional SoC design. In one embodiment, an integrated circuit design apparatus is provided. The apparatus comprises one or more hardware processors and one or more memory units storing instructions executable by the one or more hardware processors for obtaining, via the one or more hardware processors, a register transfer level code for an integrated circuit design block; parsing, via the one or more hardware processors, the register transfer level code to extract a pragma included in the register transfer level code for the integrated circuit design block; determining, via the one or more hardware processors, a timing constraint from the extracted pragma; synthesizing, via the one or more hardware processors, using the determined timing constraint, a netlist for an integrated circuit design including at least one instance of the integrated circuit design block; and providing, via the one or more hardware processors, the netlist for use in an integrated circuit manufacturing process.

In another embodiment, a method of designing an integrated circuit is provided. The method comprises: obtaining a register transfer level code for an integrated circuit design block; parsing the register transfer level code to extract a pragma included in the register transfer level code for the integrated circuit design block; determining a timing constraint from the extracted pragma; synthesizing, using the determined timing constraint, a netlist for an integrated circuit design including at least one instance of the integrated circuit design block; and providing the netlist for use in an integrated circuit manufacturing process.

In yet another embodiment, a non-transitory computer readable storage medium is provided. The storage medium stores a program that, when executed by a computer, cause the computer to perform a method of designing an integrated circuit. The method comprises: obtaining a register transfer level code for an integrated circuit design block; parsing the register transfer level code to extract a pragma included in the register transfer level code for the integrated circuit design block; determining a timing constraint from the extracted pragma; synthesizing, using the determined timing constraint, a netlist for an integrated circuit design including at least one instance of the integrated circuit design block; and providing the netlist for use in an integrated circuit manufacturing process.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
FIG. 1 illustrates an exemplary SoC implementation flow for integrating IP blocks from multiple sources.
FIG. 2 illustrates an exemplary SoC fabricated using methods and systems in accordance with some embodiments of the present disclosure.
**FIG. 3** illustrates a method for SoC implementation in accordance with some embodiments of the present disclosure.
**FIG. 4** illustrates a method for SoC implementation in accordance with some embodiments of the present disclosure.
**FIG. 5A** **and** **FIG. 5B** illustrate exemplary SoC synthesis flows in accordance with some embodiments of the present disclosure.
**FIG. 6** is a block diagram of an exemplary computer system for implementing embodiments consistent with the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

The embodiments described herein provide methods and systems for optimizing synthesis and STA in SoC design by improving integration and usage of timing constraints from multiple IP sources. As described above, the lack of efficient methods for timing constraints in implementation method 100 can lead to errors during implementation and result in loss of quality of SoC fabricated using method 100. The disclosed methods and systems can help reduce the frequency of errors and improve quality of fabricated SoC by providing standard methods of implementing timing constraints for various IP blocks and standard ways to extract these constraints at the SoC design level. In the disclosed methods and systems, the timing constraints can be embedded in the RTL code for the multiple IP blocks using pragmas that can be standardized and used by all IP development teams. A pragma is written as part of comments in the RTL code with user defined key words that can be easily identified and parsed during SoC implementation process. Embedding the timing constraints using pragmas within the RTL code can overcome the problem of specifying the timing constraints using different, non-standard data base file releases accompanying the IP RTL code. In some embodiments, extraction scripts can be used that understand the embedded pragmas and automatically extract the timing constraints for SoC implementation from all the different IP blocks. This can eliminate the human errors that occur during interpreting the timing constraints from different IP block sources in SoC implementation method 100. In some embodiments, changes can be implemented in SoC synthesis tools for convenient automatic extraction of the timing constraints that may be included in HDL code provided by the IP sources.

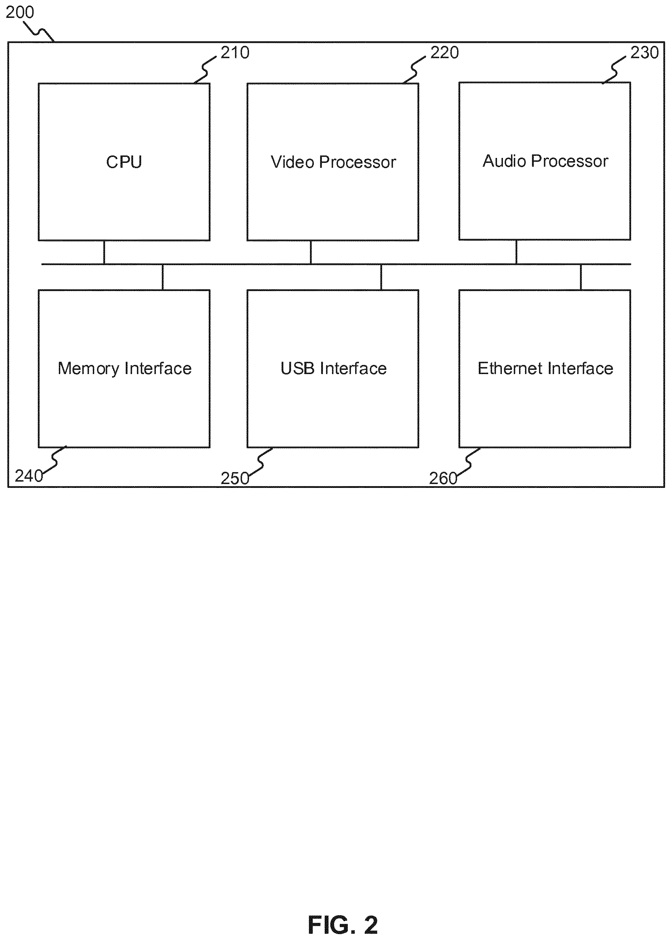

**FIG. 2** illustrates an exemplary SoC 200 fabricated using disclosed methods and systems. SoC 200 can comprise IP blocks CPU 210, video processors 220, audio processor 230, memory interface 240, USB interface 250 and Ethernet interface 260. The different IP blocks 210-260 can be provided by multiple sources. As an example, RTL code, TB and timing constraints for CPU 210 can be provided by IP source "A" in IP database 110a and RTL code, TB and timing constraints for USB interface 250 can be provided by IP source "B" in IP database 110b.

As described above, for conventional SoC implementation 100, the timing constraints can be provided by source A and source B in different formats and can lead to errors during implementation. For example, errors during implementation may cause CPU 210 to be operated at a lower frequency of 1 GHZ instead of target frequency of 2 GHz or may cause USB interface 250 to be inoperable. Disclosed methods and systems can reduce frequency of these errors and improve the quality of fabricated SoC 200.

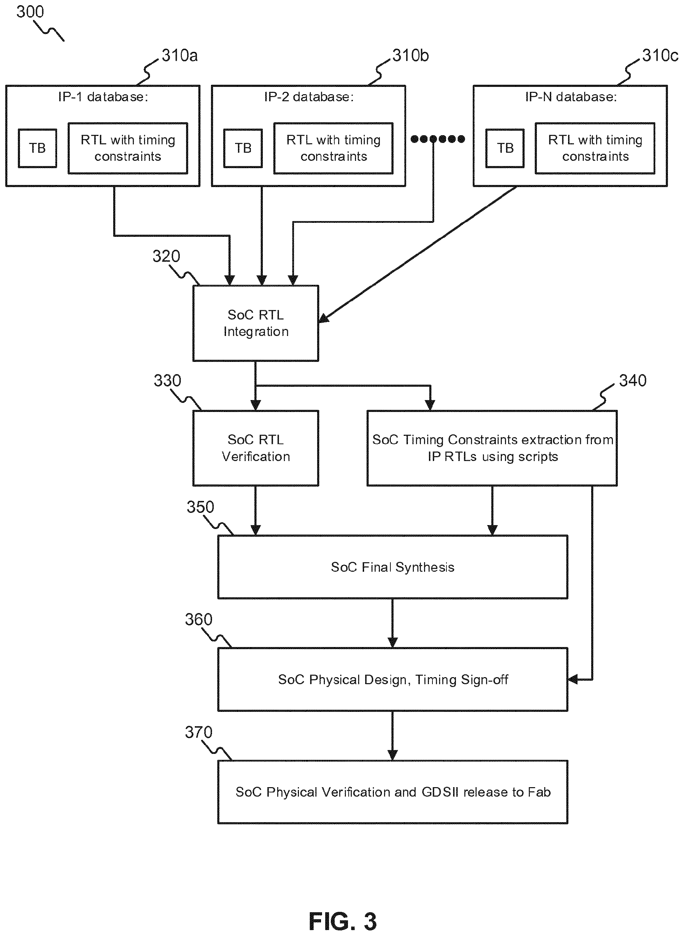

**FIG. 3** illustrates one embodiment 300 of disclosed method for SoC implementation. Method 300 can be used, for example, in fabrication of exemplary SoC 200. Referring to **FIG. 3**, it will be readily appreciated by one of ordinary skill in the art that the illustrated procedure can be altered to modify the order of steps, delete steps or further include additional steps.

In SoC implementation method 300, each IP block database 310 (310a, 310b, ...310n) can comprise RTL code (in HDL) and test bench (TB) code. As opposed to conventional SoC implementation method 100, where timing constraints are provided by different IP sources in separate files and with no consistency of formats, the timing constraints in method 300 can be included in the RTL codes using pragma based constructs.

Typical IP block-level constraints can comprise clock definitions (new clocks and/or generated clocks and their relationships), exceptions (false paths, multicycle paths), operating modes and input/output (I/O) constraints. Pragmas can be embedded as comments in the RTL code. Comments start with "//" in Verilog and so a timing constraint pragma can be implemented in Verilog using "// TimCon_P:" at the beginning of the comment, where "TimeCon_P" can be a keyword that can be interpreted by an extraction script or parser. The extraction script or parser can extract the timing constraints from the IP block level to the SoC design-level (integrated circuit-level). As an example, a pragma for new clock generation can be of the following format:

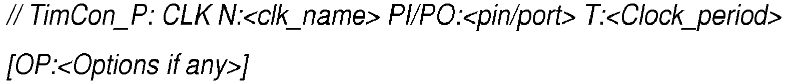

Here "CLK" can indicate that this is a new clock, "N" can indicate name of the new clock, "PI/PO" can indicate pin name or port name, "T" can indicate time period of the new clock, anything enclosed within "[" and "]" can be optional code, and "OP" can indicate optional field of the pragma. The optional field of the pragma can be used to indicate waveform or edge options. The above pragma command can be translated to following timing constraint command at IP block level:

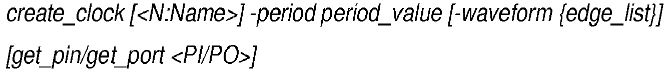

In this example, the output of this command may be a constraint file, and the constraint format may be used in, for example, a Synopsys® tool (although this example can be expanded to other tools and formats used by other tool vendors). If the above pragma command corresponds to an IP instance name IP1, then the above pragma command can get translated to following timing constraint command at SoC design-level:

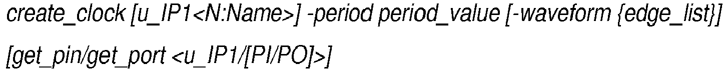

If the IP instance IP1 is instantiated twice, for example u1_IP1 and u2_IP1, the extraction/parsing scripts can generate the following two timing constraints at SoC design-level:

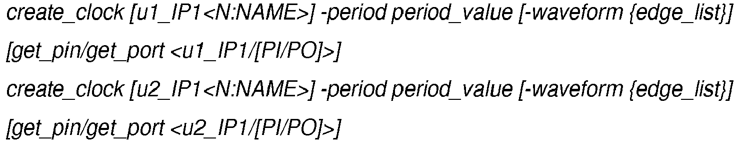

Similar pragma constructs can also be utilized for generated clocks. As an example, a pragma for new clock generation can be of the following format:

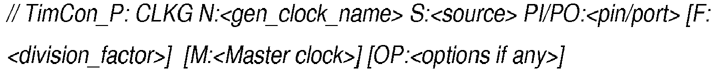

Here "CLKG" can indicate that this is a generated clock, "N" can indicate name of the generated clock, "S" can indicate source of the generated clock, "PI/PO" can indicate pin name or port name of the generated clock, "F" can be an optional division factor that can be assumed as 1 if not provided, "M" can indicate master clock for the generated clock, "OP" can be an optional field of the pragma and can be used to specify inversion or a multiplication factor or inversion.

The above pragma command can be translated to following timing constraint command at IP block level:

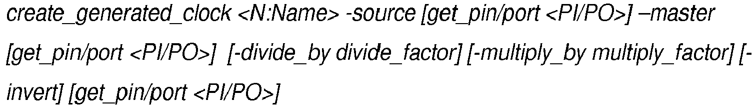

The pragma based constructs can be used to specify timing constraints and can be included within the RTL codes of IP blocks 310a, 310b, ...310n. The IP blocks 310a, 310b, ...310n can be from multiple sources but the pragma based constructs can be used as a standardized method of specifying timing constraints. This can help eliminate errors caused due to lack of standards in specifying the timing constraints in conventional SoC implementation methods, for example, method 100.

Referring back to **FIG. 3**, the SoC implementation flow 300 can begin with RTL integration 320 of the IP blocks 310a, 310b, ...310n. After SoC RTL integration 320, functional verification 330 can be performed of the integrated SoC RTL design. Additionally, since the different IP blocks 310a, 310b, ...310n may provide the timing constraints in standardized RTL code using pragmas, scripts can be used for extraction of the SoC timing constraints from the RTL code (step 340). As an example, IP blocks can have a phase locked loop (PLL) instantiated within the SoC design. The PLLs are macros which can be instantiated within the HDL design. Exemplary code using pragma based constructs can be of the following format:

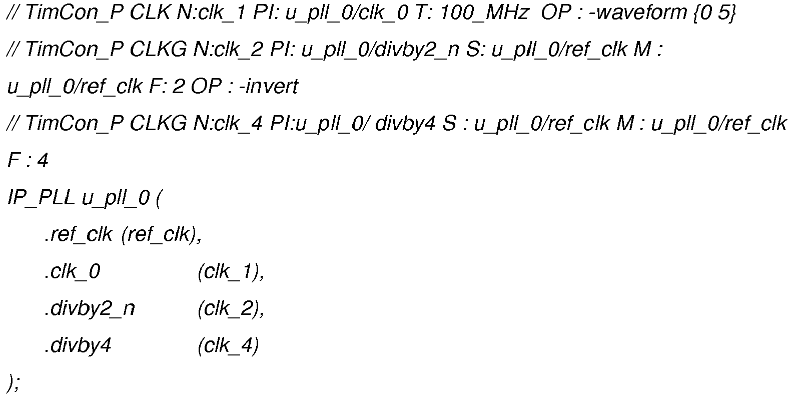

In step 340, an extraction script or parser can extract the constraints specified using the pragma based constructs and convert them to Synopsys® design constraints (SDC) format, depending upon where they are instantiated. The exemplary code above can be translated to the following commands in SDC:

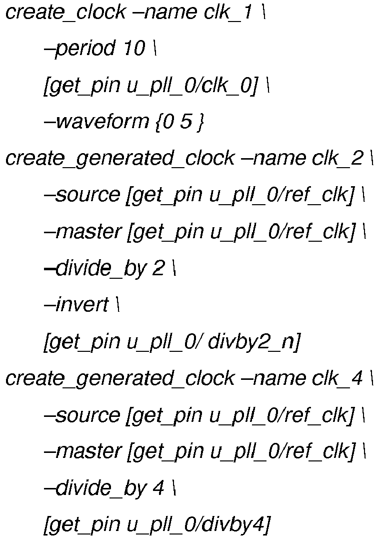

If the exemplary PLL code above is instantiated inside a clock generation IP block CGU, which may be instantiated as u_cgu in the SoC design-level, the constraints extraction script/parser can generate the following clocks:

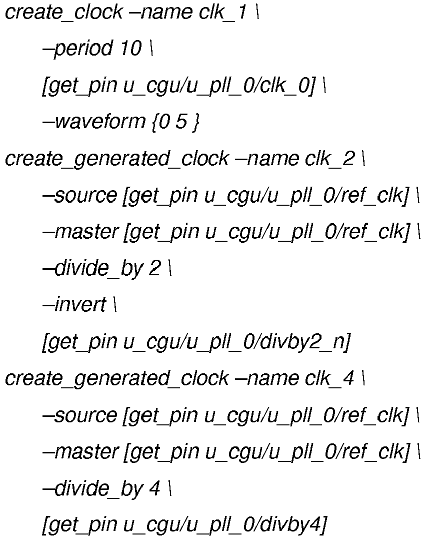

As illustrated by the example above, scripts can be used for extraction of the SoC timing constraints from the RTL code in step 340. This can provide a significant advantage over conventional SoC implementation method 100 that includes a huge amount of manual effort in understanding and deriving the timing constraints provided by different IP sources in different file formats. Disclosed method 300 can therefore result in fewer errors and improved quality of fabricated SoC compared with conventional method 100. Further, standardized pragma constructs embedded in RTL code can enable timing constraints to be obtained earlier during disclosed method 300 compared with conventional method 100. Obtaining the constraints earlier can result in a better physical SoC design in terms of chip layout (efficient use of silicon).

In some embodiments, the SoC designs can have exceptions like false paths or multi-cycle paths from various pins or registers. As an example, a SoC design can have multiple configuration registers and an enable register to start the operation. The path between the configuration registers and any other logic in the SoC design can therefore be a multicycle path since the configuration registers may be used by the other logic only when the Enable bit is set. Exemplary RTL code without using pragma based constructs can be as follows:

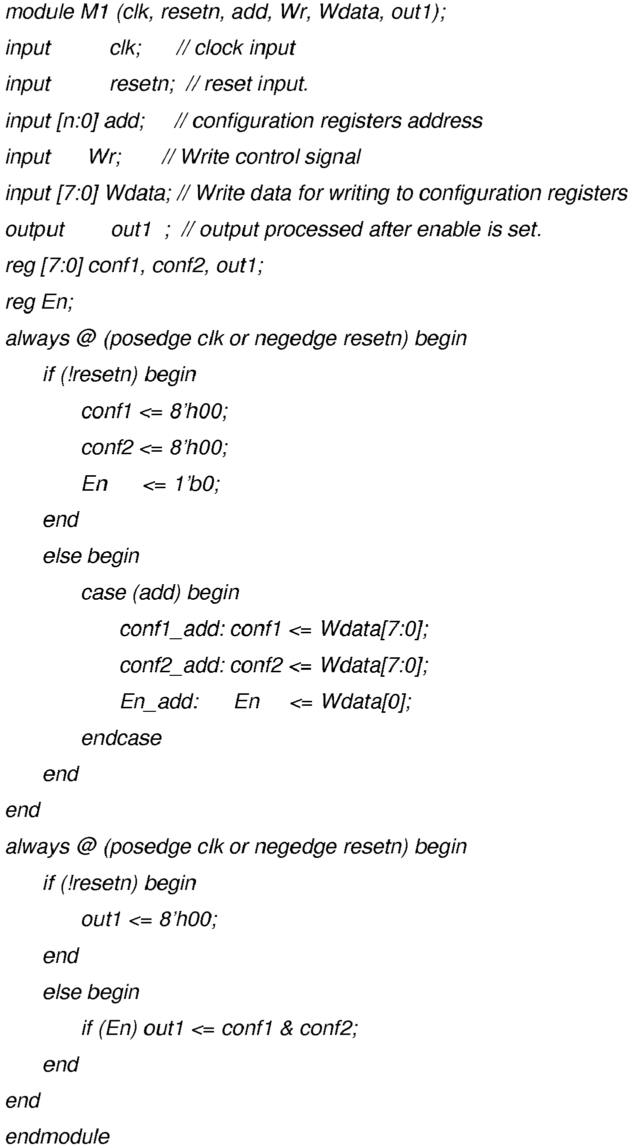

In the example above, the "conf1" and "conf2" registers can only be used when enable (En) bit is set and the code is designed so that the enable bit can be set only after performing write operation to registers "conf1 or "conf2." So any update in "conf1 or "conf2" cannot be reflected in register "out1" unless En bit is set. Therefore, there can be a multicycle path of at least two between the "conf1 or "conf2" registers and any other registers (in this case the "out1" register).

In method 300, the timing constraints for the example above can be included within the RTL code itself. Exemplary pragma constructs for specifying multicycle path can be of the following format:

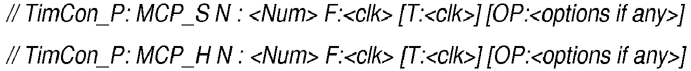

Here "MCP_S" can specify multicycle path for setup, "MCP_H" can specify multicycle path for hold, "N" can specify number of cycles for setup or hold, "F" can specify from which clock/pin/port, "T" can specify to which clock/pin/port, and "OP" can represent an optional field of the pragma. As an example "-start" or "-end" can be added to optional field of the pragma. The above pragma commands can be translated to the following timing constraint:

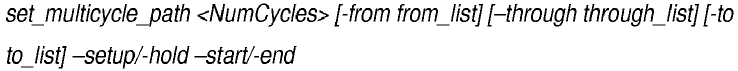

The MCP pragma can be used to code the above multicycle path example as follows:

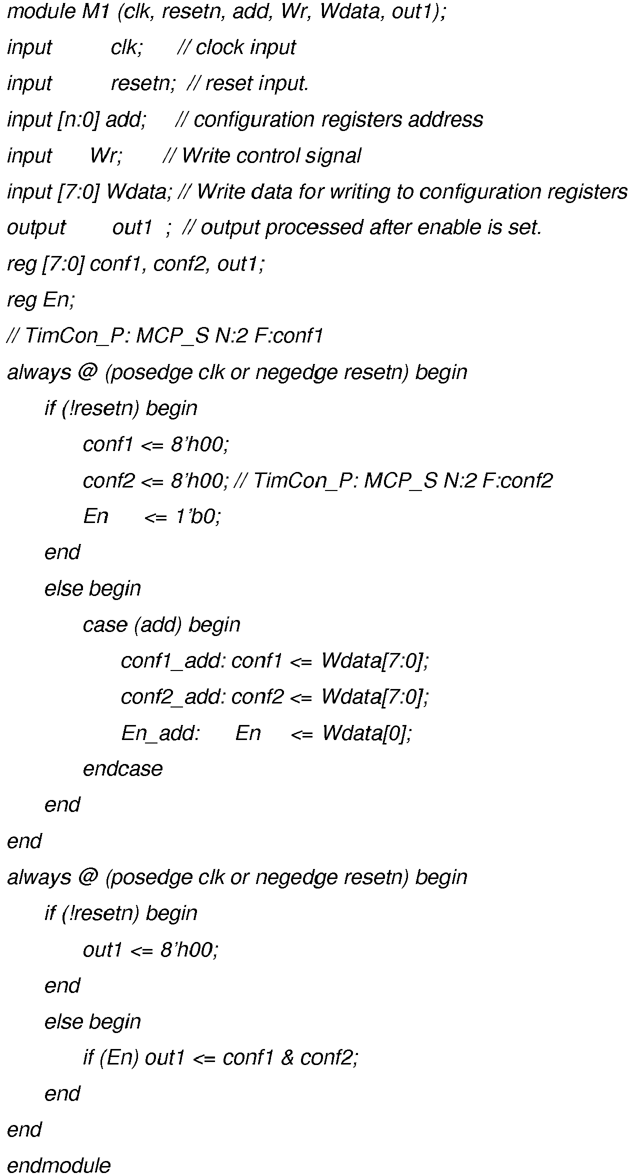

If the exemplary module above instantiated inside a SoC as u_m1, the extraction script/parser can extract the timing constraints for the above exemplary code comprising MCP pragma as:

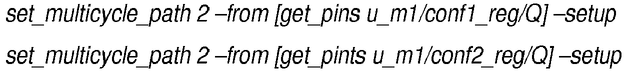

As exemplified above, pragma based constructs can be used to specify different timing constraints and can be embedded within the RTL code. The timing constraints for IP blocks from different sources can therefore be specified in a standardized format and scripts/parsers can be used for extraction of the timing constraints. Referring back to **FIG. 3**, the pragmas can be included within the RTL codes of IP blocks 310a, 310b, ...310n and the timing constraints can be extracted using scripts/parsers during step 340 of exemplary method 300.

During SoC synthesis step 350, a netlist can be generated based on the verified SoC RTL code from step 330 and the timing constraints extracted from the SoC RTL code in step 340. SoC synthesis step 350 can be performed by various electronic design automation (EDA) tools provided by tool vendors, for example, Synopsys®, Cadence, and Mentor.

In step 360, SoC physical design and timing sign-off can be completed. The extracted timing constraints can be used for timing closure during step 360 in order to achieve the required SoC performance targets. SoC implementation 300 can end with physical verification and release of the design in GDSII format in step 370. The released design can be used for fabrication of SoC, for example, SoC 200.

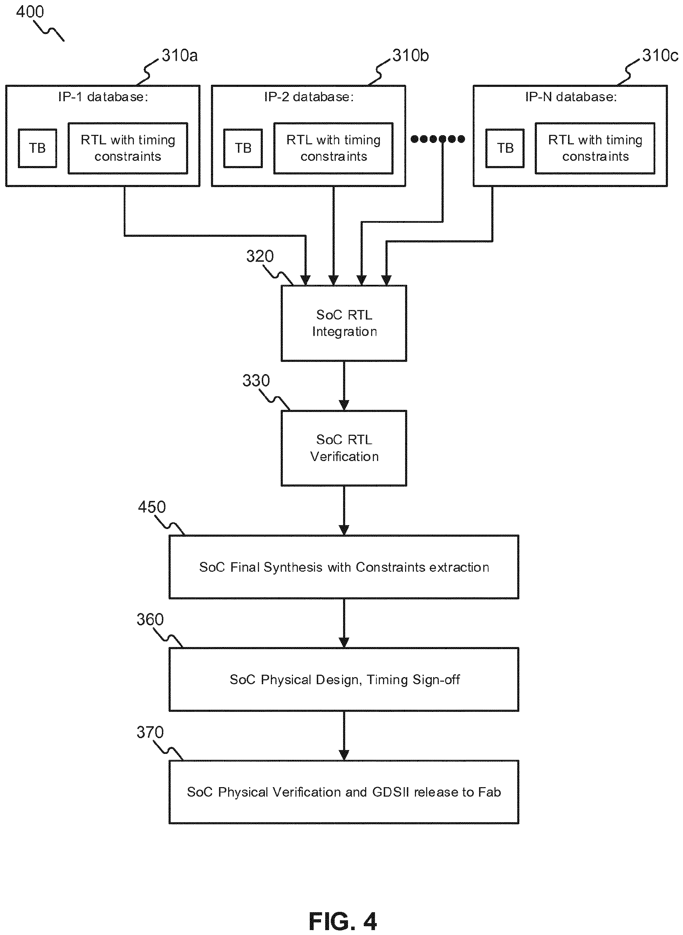

In another embodiment, exemplary method 300 can be further simplified by incorporating the constraints extraction scripts as part of the standard EDA tools that synthesize a netlist from the RTL code. **FIG. 4** illustrates a method for SoC implementation 400 that can combine steps 340 and 350 of method 300 into a single step 450 in method 400. SoC implementation method 400 shown in **FIG. 4** represents a flow where the timing constraints extraction scripts can be included as part of the EDA tools. The EDA tool approach may be used also as part of the method of **FIG. 3**. Method 400 can be used, for example, in fabrication of exemplary SoC 200. Referring to **FIG. 4**, it will be readily appreciated by one of ordinary skill in the art that the illustrated procedure can be altered to modify the order of steps, delete steps or further include additional steps.

In SoC implementation method 400, each IP block database 310 (310a, 310b, ...310n) can comprise RTL code (in HDL) and test bench (TB) code. Similar to exemplary method 300, the timing constraints in method 400 can be included in the RTL codes using pragma based constructs. Typical IP block-level constraints can comprise clock definitions (new clocks and/or generated clocks and their relationships), exceptions (false paths, multicycle paths), modes and I/O constraints.

The SoC implementation flow 400 can proceed with RTL integration 320 of the IP blocks 310a, 310b, ...310n. After SoC RTL integration 320, functional verification 330 can be performed of the integrated SoC RTL design.

During SoC final synthesis step 450, the EDA tools can receive the RTL code as user input and read the HDI code for the SoC design and convert it into an internal format. Additionally, the EDA tools can extract and apply the user supplied timing constraints included in the RTL code. Further, the EDA tools can synthesize a design optimized for the extracted timing constraints and generate a netlist based on the received RTL code. In contrast to method 300, the scripts for extracting the timing constraints can be included as part of the EDA tools in method 400.

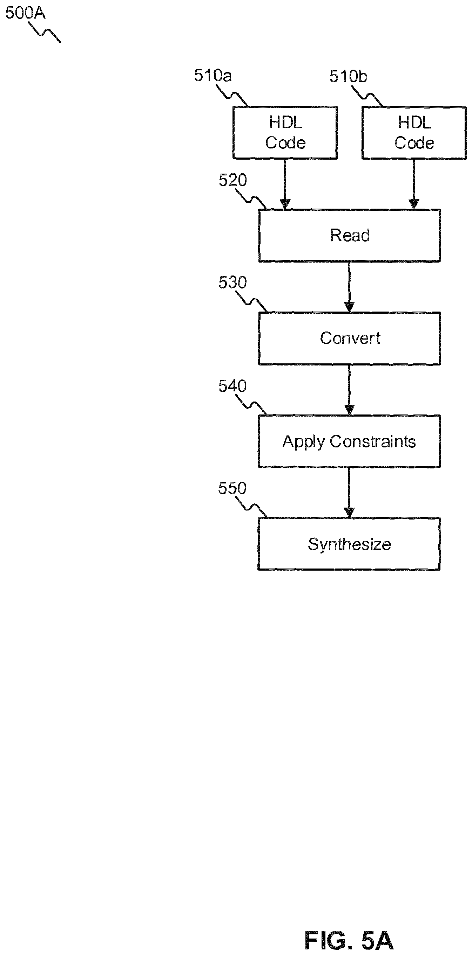

**FIG. 5A** illustrates an exemplary synthesis flow 500A performed by EDA tools, for example, during SoC final synthesis 350 of method 300. Flow 500A can begin with the EDA tools receiving the integrated and verified RTL/HDL code 510a and 510b. The EDA tools can next read the HDL code (step 520) and convert (step 530) the SoC design. In step 540, the EDA tools can apply the timing constraints, for example, extracted in step 340. Flow 500A can end with synthesize step 550 where the SoC design is optimized for the applied timing constraints and a netlist is generated.

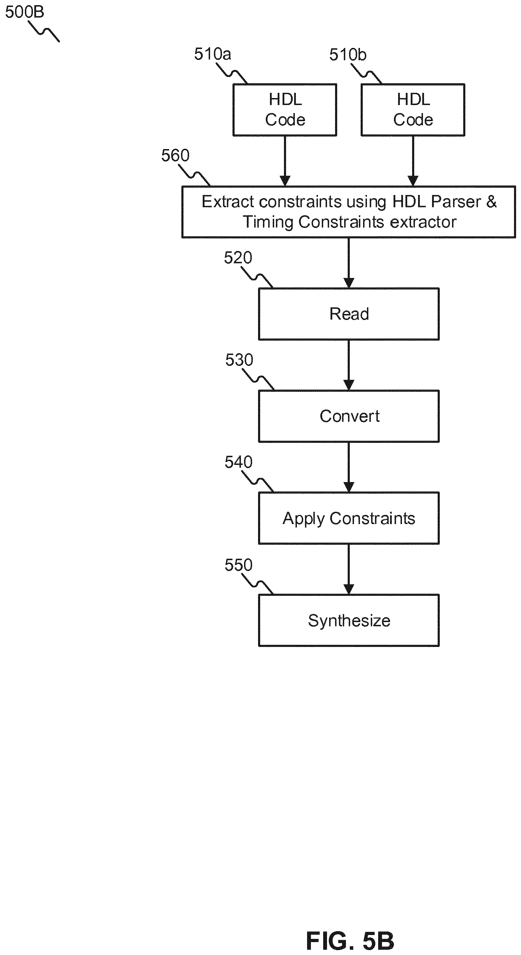

**FIG. 5B** illustrates an exemplary synthesis flow 500B performed by EDA tools comprising timing constraints extraction scripts/parsers, for example, during SoC final synthesis 450 of method 400. Similar to flow 500A, flow 500B can begin with the EDA tools receiving the integrated and verified RTL/HDL code 510a and 510b. Further, the EDA tools can use included scripts/parsers to extract the timing constraints (step 560) specified using pragma constructs in the RTL code. Step 560, although shown as a single step in **FIG. 5B**, can comprise multiple sub-steps like extracting the IP level timing constraints and further applying the timing constraints at the SoC design-level.

The EDA tools can next read the HDL code (step 520) and convert (step 530) the SoC design. In step 540, the EDA tools can apply the timing constraints extracted in step 560. Flow 500B can end with synthesize step 550 where the SoC design is optimized for the applied timing constraints and a netlist is generated.

Referring back to **FIG. 4**, SoC physical design and timing sign-off can be completed in step 360. The extracted timing constraints can be used for timing closure during step 360 in order to achieve the required SoC performance targets. SoC implementation 400 can end with physical verification and release of the design in GDSII format in step 370. The released design can be used for fabrication of SoC, for example, SoC 200.

### Computer System

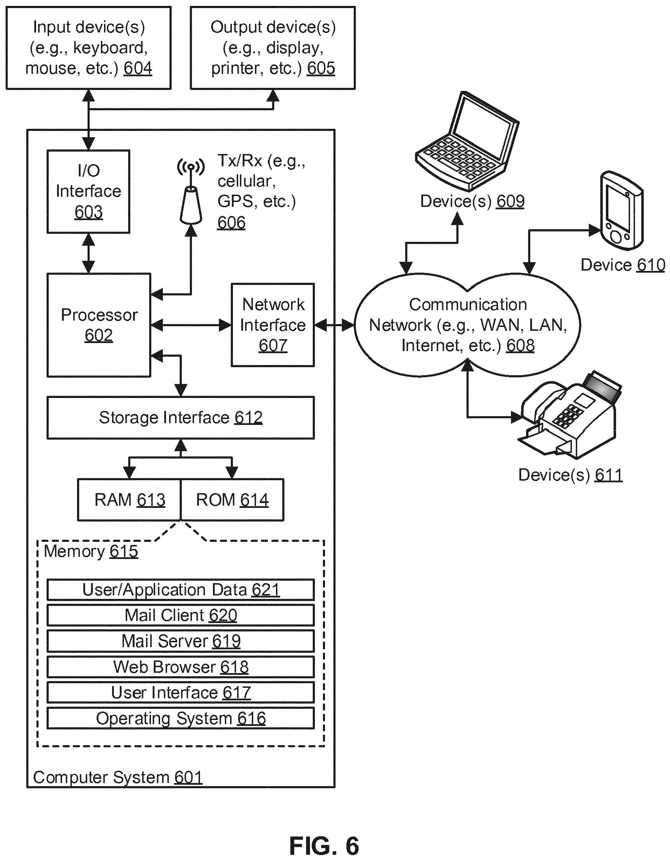

**FIG. 6** is a block diagram of an exemplary computer system 601 for implementing embodiments consistent with the present disclosure. Variations of computer system 601 may be used for implementing the devices and systems disclosed herein. Computer system 601 may comprise a central processing unit ("CPU" or "processor") 602. Processor 602 may comprise at least one data processor for executing program components for executing user- or system-generated requests. A user may include a person, a person using a device such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron, and/or other line of processors, etc. The processor 602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more I/O devices via I/O interface 603. The I/O interface 603 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.11 a/b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 603, the computer system 601 may communicate with one or more I/O devices. For example, the input device 604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 605 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 602 may be disposed in communication with a communication network 608 via a network interface 607. The network interface 607 may communicate with the communication network 608. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 608 may include, without limitation, a direct interconnection, local area network (LAN), wide area network (WAN), wireless network (e.g., using Wireless Application Protocol), the Internet, etc. Using the network interface 607 and the communication network 608, the computer system 601 may communicate with devices 610, 611, and 612. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 602 may be disposed in communication with one or more memory devices (e.g., RAM 813, ROM 814, etc.) via a storage interface 612. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc. Variations of memory devices may be used for implementing, for example, the databases disclosed herein.

The memory devices may store a collection of program or database components, including, without limitation, an operating system 616, user interface application 617, web browser 618, mail server 619, mail client 620, user/application data 621 (e.g., any data variables or data records discussed in this disclosure), etc. The operating system 616 may facilitate resource management and operation of the computer system 601. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 601 may implement a web browser 618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 601 may implement a mail server 619 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 601 may implement a mail client 620 stored program component. The mail client may be a mail viewing application, such as Apple Mail, Microsoft Entourage, Microsoft Outlook, Mozilla Thunderbird, etc.

In some embodiments, computer system 601 may store user/application data 621, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of any computer or database component may be combined, consolidated, or distributed in any working combination.

The specification has described methods and systems for timing constraint generation in IP/SoC design. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for designing an integrated circuit, the method comprising:
obtaining a register transfer level code for an integrated circuit design block;
parsing the register transfer level code to extract a pragma included in the register transfer level code for the integrated circuit design block;
determining a timing constraint from the extracted pragma;
synthesizing, using the determined timing constraint, a netlist for an integrated circuit design including at least one instance of the integrated circuit design block; and
providing the netlist for use in an integrated circuit manufacturing process.

2. The method of claim 1, wherein the timing constraint comprises an integrated circuit design block-level timing constraint and/or an integrated circuit design-level timing constraint.

3. The method of claim 1 or claim 2, wherein the timing constraint comprises any one or more of a clock definition, a path specification, an input/output constraint, and a timing constraint determined based on an operating mode.

4. The method of any of the preceding claims, further comprising:
determining an integrated circuit-level timing constraint from the extracted pragma; and
synthesizing the netlist for the integrated circuit design further using the determined integrated circuit-level timing constraint.

5. The method of any of the preceding claims, wherein the pragma is included as an inline comment in the register transfer level code.

6. The method of any of the preceding claims, wherein the pragma includes one or more optional fields for determining an integrated circuit design block-level timing constraint.

7. The method of any of the preceding claims, further comprising:
executing an electronic design automation tool for parsing the register transfer level code to extract the pragma and determining an integrated circuit design block-level timing constraint.

8. The method of any of the preceding claims, wherein the determined timing constraint is usable for timing closure during a physical design or a layout of an integrated circuit corresponding to the synthesized integrated circuit design.

9. The method of any of the preceding claims, further comprising:
obtaining a second register transfer level code for a second integrated circuit design block, wherein the second register transfer level code for the second integrated circuit design block is obtained from a different source than the register transfer level code for the integrated circuit design block;
parsing the second register transfer level code to extract a second pragma included in the second register transfer level code for the second integrated circuit design block;
determining a second integrated circuit design block-level timing constraint from the extracted second pragma; and
synthesizing the netlist for the integrated circuit design further including at least one instance of the second integrated circuit design block, using the determined second integrated circuit design block-level timing constraint.

10. A computer readable storage medium storing a program that, when executed by a computer, cause the computer to perform the method of any of the preceding claims.

11. An integrated circuit design apparatus, comprising:
one or more hardware processors; and
one or more memory units storing instructions which when executed cause the one or more hardware processors to perform the method of any of claims 1 to 9.
